**Europäisches Patentamt**

**European Patent Office**

**Office européen des brevets**

(19)

(11) Publication number : **0 490 585 A1**

## (12) EUROPEAN PATENT APPLICATION

(21) Application number : **91311358.5**

(22) Date of filing : **05.12.91**

(51) Int. Cl.⁵ : **B60C 17/04**

(30) Priority : **07.12.90 US 624308**

(43) Date of publication of application :
**17.06.92 Bulletin 92/25**

(84) Designated Contracting States :
**AT BE DE ES FR GB GR IT LU NL SE**

(71) Applicant : **Lin, Yng-Lang**
**2F., No. 17, Lane 49, Chung Hsiao E. Rd., Sec. 1**
**Taipei (TW)**

(72) Inventor : **Lin, Yng-Lang**
**2F., No. 17, Lane 49, Chung Hsiao E. Rd., Sec. 1**
**Taipei (TW)**

(74) Representative : **Arthur, Bryan Edward et al**
**Withers & Rogers 4 Dyer's Buildings Holborn**
**London EC1N 2JT (GB)**

(54) **Safety vehicle wheel with a spare wheel inside its tire.**

(57)    The safety vehicle wheel comprising a combined rim formed in a seperable way by connecting a plate with a flange as well as a ring with a flange and a inner flange on two sides respectively, a tire and a free air-pumped spare wheel (12) connected between the plate and the ring. The outer circumference of the spare wheel is kept at a proper distance with the circumference inside of the tire. The safety vehicle wheel can immediately re-support a vehicle to be driven continuously and especially prevent an accident when a blowout or flat of tire is occured.

EP 0 490 585 A1

## BACKGROUND OF THE INVENTION

Field of the invention:

The invention relates generally to the construction of vehicle wheels, and more particularly to a safety vehicle wheel with a free air-pumped spare wheel inside its tire. The safety vehicle wheel can immediately re-support a vehicle to be driven continuously and especially prevent an accident when a blowout or air leakage of tire is occured.

Description of the prior art:

It is impossible to prevent blowout or air leakage of tires though, previously, some people invented a auxiliary wheel at all times attached to one side of the wheel of a vehicle to support the vehicle by contacting the road when blowout or air leakage of tire is occured. However, said auxiliary wheel is attached to the flank side of vehicle wheel and protrudes sideward, thus two defects are existed in the prior art as belows:

(a) the auxiliary wheel tends to collide the protuberance on the boundary line of road to cause the damage of its rubber as well as other parts when the vehicle changes lanes.

(b) the auxiliary wheel tends to collide wall or other objects while the vehicle is parking to sideway. The invention can not only make vehicle driven continuously but also prevent an accident when blowout or air leakage of tire occured. Besides, it also provides a solution for above said prior art's two defects.

## SUMMARY OF THE INVENTION

The invention relates to the construction of vehicle wheels, and more particularly to a safety vehicle wheel with a free air-pumped spare wheel inside its tire. The safety vehicle wheel can immediately re-support a vehicle to be driven continuously and especially prevent an accident when a blowout or air leakage of tire is occured.

The safety vehicle wheel comprises a combined rim formed in a separable way by connecting a plate with a flange as well as a ring with a flange and a inner flange on two sides respectively, a tire and a free air-pumped spare wheel connected between the plate and the ring. The spare wheel's outer circumference is kept at a proper distance with the circumference inside of the tire.

The objects of the invention is not only to make vehicle to be driven continuously but also to prevent an accident when blowout or air leakage of tire is occured. Besides, it also provides a solution for defects of the prior art mentioned above. The manufacture of safety vehicle wheel comprises using steel sheet to make matel parts of the combined rim and the spare wheel by press. The rubber parts of spare wheel were manufactured by rubber shaped machine. Nevertheless, its tire is a conventional tire used nowadays.

## BRIEF DESCRIPTION OF THE DRAWINGS

FIG. 1 is a section elevation of the safety vehicle wheel;
FIG. 2 is a side view elevation of a half of spare wheel;
FIGS. 3 and 4 show a side view fragmentary elevation of the plate part and ring-shaped part of the combined rim of the safety vehicle wheel, respectively;
FIG. 5 is a side view elevation of the circumference of the spare wheel which is at least devided into three arc-shaped parts.

## DESCRIPTION OF THE PREFERRED EMBODIMENT

The invention comprises a combined rim, a tire, two semi-ring troughs, two semi-ring rubbers, a pair of washers, a pair of plugs, co-axial positioned parts, and screws, etc. The combined rim is formed in a separable way by connecting a plate 2 with a flange 1 as well as a ring 5 with flange 3 and inner flange 4 on two sides respectively to mount the tire 5A well. The bottom of the plate has one set of fixed screws 6 near its circumference. The inner flange 4 of the ring has one set of holes 7 symmetrical to the screws 6. By means of connecting the plate and the ring by the screws 6 through the holes 7 and then tightening nuts 7B, the combined rim is formed therefore.

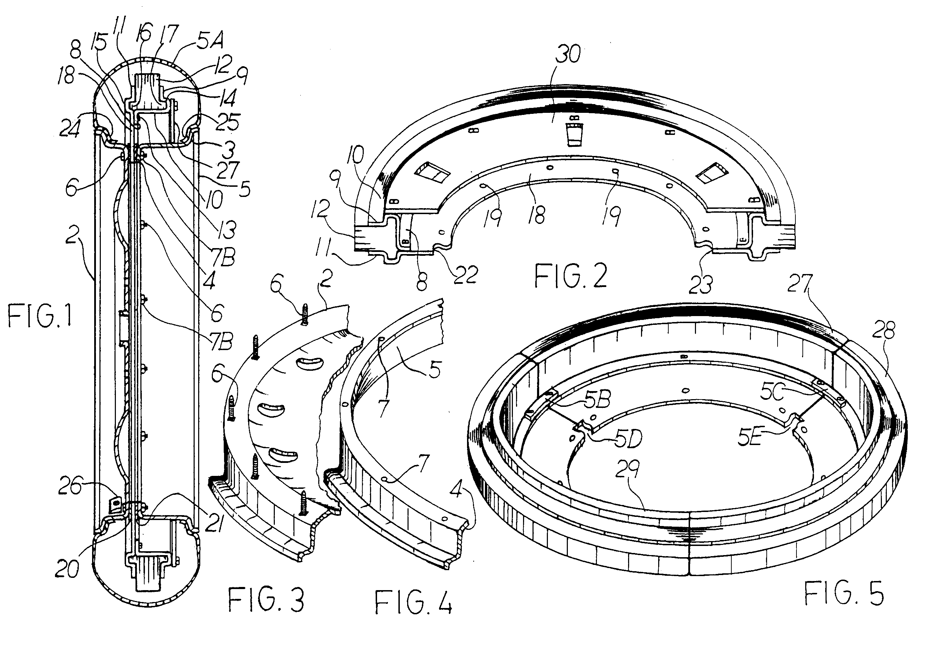

The two semi-ring troughs are formed respectively in a separable way by connecting a semi-ring 10 with an inner flange 8 and an outer flange 9 on two sides respectively as well as a flat semi-ring 11 , in order to clamp the semi-ring rubber 12 to compose a half wheel of Fig. 2. In other words, two set of holes being symmetrical each other are made in the semi-ring's inner flange and the flat semi-ring respectively, and one of which is internal threads.

First, the semi-ring rubber's inner circumference leans on the semi-ring's outer circumference, then connecting the semi-ring with the flat semi-ring by screws 13 to form the semi-ring trough to clamp and support the semi-ring rubber, thus a half of wheel is constituted therefore. The semi-ring concave portions 14, 15 respectively locate at the two sides of the semi-ring trough near to its bottom. The semi-ring rubbers have convex portions 16, 17 on two sides respectively for matching with each concave portion, each convex portion is inlaid in its corresponding each concave portion respectively to prevent the semi-ring rubber from dropping. Each semi-ring trough with a fixed-use flange 18 protruding inside for fixing is formed by positioning the width of the flat semi-ring over the inner flange 8 of the semi-ring. Besides, each fixed-use flange has one set of holes 19 for screws 6 to be passed through, so as to be connected between the bottom of the plate and the inner flange 4 of the ring.

The pair of washers is made of corrode-proof and of heat-resisting article and of having as the resilience of rubber and each washer has one set of holes symmetrical to the holes 19. The pair of washer 20, 21 are connected on the two sides of each fixed-use flange respectively to make the plate, each fixed-use flange and the ring 5 connected tightly so as to prevent air leakage of the tire.

The two ends of each fixed-use flange have concave steps 22,23 respectively to form a gap (for example 5D, 5E) between the connected ends of each fixed-use flange when the two semi-ring trough are connected into one ring trough. The pair of plugs are used to stop each gap to prevent air from leakage out of the tire. The material of each plug made of is same as that of the pair of washers made of.

Each concave steps has a curved portion and each plug is curved so as to match with each curved portion. Besides, it attain the purpose of preventing air leakage of tire doubly because the width of each plug is somewhat wider than that of the gap.

Each plug is formed on one of the pair of washers and one of the pair of washers is stucked on the bottom of the plate beforehand. Thus, the plug can be wedged in each gap conveniently.

The co-axial positioned parts attain the purpose of turning in a same axle after the plate, the two semi-ring troughs and the ring 5 have been connected one another. In other words, the center of the screws 6, the holes 19 and the holes 7 are set according to a same circumference and the center of said circumference was set according to the center of axle of vehicle.

When each half wheels are laid in the thre respectively, there are at least two connected pieces (for example 5B, 5C) to connect each half wheel into one wheel for fixing each half wheel in the tire conveniently. The two connected pieces are over on the ends of each semi-ring's inner flange 8 respectively and the two ends of each connected piece are fixed on each semi-ring's inner flange respectively, so as to connect each half wheel into one wheel.

To form the safety vehicle wheel is very simple and quick. First, lay the plate under the tire and make its flange 1 match with the rim 24 on the first side of the tire. Second, put each half wheels into the tire respectively, then, make the holes 19 to be passed through the screws 6 and each concave steps clamp each plug, then, fix each connected piece to form each half wheels into one wheel, then, make the holes 7 to be passed through the screws 6 and the flange 3 of the ring match with the rim 25 on the second side of the tire, at last, tighten the nuts 7B well to make the spare wheel immediately fix on the center between the two sides of the tire inside, a safety vehicle wheel is therefore completed.

Each inner diameter of the holes 19 of one of the two fixed-use flange are bigger than each outer diameter of the screws 6 so that one of the two fixed-use flange can be moved to wedge each plug into each gap, then, to move one of the two fixed-use flange back to clamp each plug tightly. One set links can respectively encircle the outer diameter of each of screws 6 to fill the bigger portion.

The ring portion of plate has a small portion 26 inclining toward the inside and bottom of the plate, the small portion is used to mount a valve and make the valve incline toward the outside of the safety vehicle wheel to attain the purpose of pumping air into the tire easily. The small portion is formed by the press.

The width of the ring portion of plate can not only support the rim 24 of one side of the tire but also mount the valve.

For the purposes of the manufacturing quickly and preventing the environmental pollution due to stench and thick smoke resulting from welding, the shapes of the plate, the ring 5, the semi-ring and the flat semi-ring etc. are formed by a founding or press model in whole, thus they need not to weld by welding machine.

A steel sheet for making the plate and the ring 5 is somewhat thicker than that a conventional rim made of. Especially, angles are formed respectively by the ring portion of plate and the bottom as well as the ring portion of ring and inner flange can make the safety vehicle wheel enough to support the weight of the vehicle. The plate's bottom has one set of holes symmetrical to one set of threads which connect vehicle wheel to vehicle's axle so as to connect the safety vehicle wheel with the axle.

Another embodiment of the spare wheel comprises:

(a) The circumference of the spare wheel at least divided into three arc-shaped parts 27, 28, 29 during manufacture, then to form the spare wheel, so as to be laid inside the tire if the spare wheel is manufactured bigger.

(b) The formation of each arc-shaped part includes changing the semi-ring trough and the semi-ring rubber into arc-shaped (for example 27) respectively during manufacture.

The side of each semi-ring have semi-ring support 30 making the spare wheel increasing to support the weight of the vehicle. The first end of the semi-ring support is fixed on the side of the each semi-ring, and second end of the semi-ring support is against the ring portion of the ring 5.

Since the outer diameter of the spare wheel is bigger than the inner diameter of the tire, the spare wheel must be devided into two half wheels or three arc-shaped parts to be laid in the tire.

Since a tire is mounted in the conventional rim by the flange on one side of the conventional rim through the tire's hollow (inner diameter), if the spare wheel is mounted on the conventional rim directly, the tire will be obstructed to cause the flange on one side and can not go through the tire's hollow. Therefore, the combined rim is used in the safety vehicle wheel.

Because the outer circumference of spare wheel is kept at a proper distance with the inner circumference of the tire when the tire is pumped air to a certain degree, the spare wheel will not touch the tire in normal time. In addition, since the specification of the combined rim is same as the conventional, as well as having the same axle positioned parts and the spare wheel located on the center between the two sides inside the tire, the safety vehicle wheel is stable as the conventional wheel when turning.

The bottom of the plate has a set of square holes to be passed through the set of screws and each of the set of screws has a square portion on one end which locate its head. The set of square holes and the each square portion for each of the set of screws not turned when tightening each of the set of screws.

## Claims

1. An safety vehicle wheel with a spare wheel inside its tire comprising:
   a combined rim,
   a tire,
   a spare wheel,
   said combined rim is formed in a separable way by connecting two objects with a flange respectively,
   by said connection making each flange to restrict each rim of each side of said tire respectively,
   said spare wheel having an inner flange used to be connected at the middle of said two objects connected so as to fix said spare wheel,
   the outer circumference of the spare wheel being kept at a distance with circumference inside of the tire so that said spare wheel can immediately re-support a vehicle to be driven continuously and to prevent an accident when a blowout or air leakage of said tire is occured.

2. The safety vehicle wheel of claim 1 further comprising:
   said combined rim is formed in a separable way by connecting a plate with a flange as well as a ring with a flange and a inner flange on two sides respectively,
   said plate's bottom having a set of screws near its circumference,

said inner flange having a set of holes symmetrical to said set of screws,
   the formation of said spare wheel including connecting two half wheel into one wheel,
   the composition of said two half wheel respectively including a semi-ring rubber clamped/supported by a semi-ring trough,
   said two semi-ring troughs respectively having a fixed-use flange protruding inside for fixing and each fixed-use flange having a set of holes flange which has a set of holes symmetrical to some of said set of screws,
   each fixed-use flange connected at the middle of the connected portion which said plate and said ring are connected,
   the two sides of each fixed-use flange having washers preventing air leakage out of inner of said tire respectively and each washer having a set of holes to be through said set of screws,
   between connected ends of each fixed-use flange, a plug having resilience as rubber being stopped tightly in order to prevent air leakage out of inner of said tire,
   each set of holes mentioned-above to be passed through by said set of screws and by using a set of nuts to be tighten them to fix said spare wheel inside said tire to compose said safety vehicle wheel.

3. The safety vehicle wheel of claim 2, wherein said a set of screws are fixed so as to each set of holes mentioned-above to be passed through said a set of screws very easily.

4. The safety vehicle wheel of claim 2, wherein, said two semi-ring troughs are formed respectively in a separable way by connecting a semi-ring with a inner flange and a outer flange on two sides respectively as well as a flat semi-ring.

5. The safety vehicle wheel of claim 2, wherein, the two ends of each fixed-use flange have concave steps respectively to form a gap between the connected ends of each fixed-use flange when said two semi-ring trough are connected into one ring trough, so as to have said plug stop and make said connected ends tight.

6. The safety vehicle wheel of claim 2 further comprising, two semi-ring concave portions respectively locate at the two sides of said semi-ring trough near its bottom, and said semi-ring rubber having convex portions on two sides respectively so as to be inlaid respectively in each said concave portion to prevent said semi-ring rubber from dropping.

7. The safety vehicle wheel of claim 2, wherein, each plug is formed on the washer which is connected on the bottom of the plate to enable the plug to be wedged in each gap conveniently.

8. The safety vehicle wheel of claim 2 further comprising, said plate's ring portion having a small portion inclining toward the inside and bottom of said plate, said small portion being used to mount a valve and making the valve incline toward the outside of the safety vehicle wheel to attain the purpose of pump air into tire easily.

9. The safety vehicle wheel of claim 2, wherein, the width of the ring portion of said plate can not only support the rim of one side of said tire but also mount said valve.

10. The safety vehicle wheel of claim 2 further comprising, for the purposes of the manufacturing quickly and preventing the environmental pollution due to stench and thick smoke resulting from welding, the shapes of said plate, said ring, said semi-ring and said flat semi-ring etc., wherein, at least said plate is formed by press model in whole, and without need of welding process.

11. The safety vehicle wheel of claim 2 comprising, for the purposes of the manufacturing quickly and preventing the environmental pollution due to stench and thick smoke resulting from welding, the shapes of said plate, said ring, said semi-ring and said flat semi-ring etc., wherein, at least said plate is formed by founding model in whole, thus without need of welding process.

12. The safety vehicle wheel of claim 2 comprising, when each half wheel being laid in said tire respectively, by using at least two connected pieces to connect each half wheel into one wheel for fixing each half wheel in said tire conveniently.

13. The safety vehicle wheel of claim 1 or 2 comprising, circumference of said spare wheel being at least divided into three arc-shaped parts during manufacture, then to form said spare wheel, so as to be laid inside said tire if said spare wheel is manufactured bigger.

14. The safety vehicle wheel of claim 13, wherein, the formation of each arc-shaped part includes to change said half wheel into arc-shaped, that is, to change said semi-ring trough and said semi-rubber into arc-shaped respectively during manufactured.

15. The safety vehicle wheel of claim 13 comprising, using the designs of said convex steps, said plugs, said curved portions and said connected pieces etc.

16. The sefety vehicle wheel of claim 1 or 2, comprising,
   the side of said spare wheel has a support to enable said spare wheel increasing to support the weight of said vehicle, wherein
   the first end of said support is connected with said spare wheel and the second end of said support is against on ring portion of said combined rim.

17. The sefety vehicle wheel of claim 1, comprising, the bottom of said plate having a set of square holes to be passing through said set of screws and each of said set of screws having a square portion on one end locating near its head, said set of square holes and said square portion for each of said set of screws preventing from being turned when each of said set of screws is tightened.

FIG.1

FIG.2

FIG.3

FIG.4

FIG.5

**European Patent Office**

## EUROPEAN SEARCH REPORT

Application Number

EP    91 31 1358

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 147 495 (DE KERSAUSON DE TREBAOL)<br>* page 1, line 16 - page 2, line 20 * | 1 | B60C17/04 |
| Y | * page 4, line 1 - page 5, line 15 *<br>* page 7, line 1 - line 10; figures 1-3 * | 2,4 | |
| Y | US-A-2 040 645 (F.DICKINSON)<br>* page 2, left column, line 59 - right column, line 17 * | 2,4 | |
| X | DE-A-3 818 648 (H.BRUCHER)<br>* column 3, line 45 - column 4, line 33; figure 1 * | 1 | |
| X | FR-A-2 198 848 (DUNLOP)<br>* page 3, line 35 - page 7, line 24 * | 1,2 | |
| A | DE-A-1 480 736 (BRETTSCHNEIDER) | 1,2 | |
| A | FR-A-2 282 346 (GOODYEAR) | 1,2 | |
| A | US-A-3 135 556 (W.LINDLEY) | 1 | TECHNICAL FIELDS SEARCHED (Int. Cl.5)<br><br>B60C |

The present search report has been drawn up for all claims

| Place of search | Date of completion of the search | Examiner |
|---|---|---|
| THE HAGUE | 10 MARCH 1992 | SCHMITT L.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)